# EUROPEAN PATENT APPLICATION

(11) **EP 1 425 955 A2**
(43) Date of publication of application: **09.06.2004**
(21) Application number: 03257410.5
(22) Date of filing: 24.11.2003
(51) Int. Cl.: A01D 43/063, A01D 43/06, A01D 34/71

(54) **Lawnmower**

(30) Priority: 05.12.2002 GB 0228403
(71) Applicant: Electrolux Outdoor Products Limited, Newton Aycliffe, County Durham DL5 6UP (GB)
(72) Inventor: Coates, Neil, Sedgefield, County Durham, TS21 3AX (GB); Smith, Ian Zetterstrom, Stapleton, Yorkshire, DL2 2QJ (GB)
(74) Representative: Pratt, David Martin

(57) **Abstract**

A lawnmower comprises a housing (2), a hood (1) within the housing, a cutting chamber (3) within the hood above ground datum, and a grass-box (9) positioned above the hood. The grass-box (9) is pivotally mounted within the housing (2) for movement between a first operating position in which cut grass can enter the grass-box via an opening (9b) at one end, and a second operating position in which the grass-box opening faces away from ground datum, thereby preventing cut grass falling out of the grass-box.

## Description

This invention relates to a lawnmower, and in particular to a hover mower.

A known hover mower includes a hood defining a hover chamber, a source of pressurised air, and means for directing at least part of the pressurised air from the source to the hover chamber, the pressurised air serving to support the mower above the ground. A cutter in the form of a blade rotates within the hood, so that the hood defines a cutter chamber as well as a hover chamber. A perforated grass-box is provided within the body of the mower above the hood, the arrangement being such that the source of pressurised air can draw air from the grass-box thereby creating a negative pressure within the grass-box. The negative pressure in the grass-box can, therefore, be used to pick up cut grass from the ground at the rear of the machine.

In one form of known hover mower, the grass-box is open over its entire cross-section at the upper end thereof, and cut grass is forced into the grass-box via a small entry aperture in the rear wall towards the base. This form of grass-box has two disadvantages - namely that grass can spill out through the entry aperture either as the grass-box is removed from the machine for emptying or as it is transported for emptying, and that the open upper end of the grass-box has a large cross-section which gives rise to difficulties in emptying grass into, for example, a standard wheelie bin, whose cross-sectional area is somewhat smaller than that of the grass-box.

In another known form of hover mower, the grass-box has a necked inlet for entry of cut grass, the necked inlet also constituting an exit chute through which grass can be emptied, either onto a compost heap or into a container such as a wheelie bin. The necked inlet gives rise to the disadvantage that it is difficult to empty the grass-box due to blocking or bridging of the necked inlet, particularly when the cut grass is wet.

In yet another form of hover mower, the grass-box has an inlet for cut grass towards the top of the rear wall, and this reduces the chance of spillage when the grass-box is removed from the mower for emptying. This type of grass-box does, however, still have the disadvantage that it is difficult to empty into a standard wheelie bin without grass spillage. It also has the disadvantage that grass must be lifted a substantial distance from the ground, and then turned through an angle to enter the grass-box at the top. The passage which is provided to feed cut grass in this manner does, therefore, tend to clog with cut grass, particularly when the cut grass is wet.

The present invention provides a lawnmower comprising a housing, and a grass-box, wherein the grass-box is mounted on the housing for movement between a first operating position in which cut grass can enter the grass-box via an opening, and a second operating position in which the grass-box opening faces away from ground datum, thereby preventing cut grass falling out of the grass-box.

Advantageously, the grass-box opening is at one end of the grass-box, and is positioned substantially vertically when the grass-box is in its first operating position, and substantially horizontally and uppermost when the grass-box is in its second operating position. Preferably, the grass-box is pivotal about an axis transverse to the central longitudinal axis of the lawnmower. Conveniently, the grass-box is formed with cam track means engagable with cam means provided within the housing, the cam track means and the cam means constituting means for pivotally mounting the grass-box within the housing. In this case, the cam track means may be constituted by two cam tracks, one on each side surface of the grass-box, and the cam means is constituted by two cams projecting inwardly from the two sides of the housing.

In a preferred embodiment, the lawnmower further comprises a hood within the housing, and a cutting chamber within the hood above ground datum. Preferably, the grass-box is positioned within the housing above the hood.

Preferably, the lawnmower further comprises a lid which overlies the grass-box when the grass-box is in its first operating position, the lid being pivotally connected to the housing.

Conveniently, the lid is pivotally connected to the housing by means of two cylindrical bosses projecting inwardly from the two sides of the housing, and complementary apertures formed in the sides of the lid. The lawnmower may further comprise means for locking the lid to the grass-box as the grass-box moves between its first and second operating positions. Advantageously, the locking means is constituted by the engagement of the bosses with second cam tracks formed one on each side surface of the grass box, and by the engagement of the cams within the first-mentioned cam tracks. Preferably, the arrangement is such that, after the grass-box and the lid are pivotable together until the grass-box is in its second operating position, the lid is subsequently pivotable further relative to the grass-box, and the grass-box is then removable from the housing by sliding the cams along the first-mentioned cam tracks and the bosses along the second cam tracks.

In a preferred embodiment, the lawnmower further comprises an airflow source, preferably an impeller rotatably mounted within the cutting chamber. In this case, the grass-box may include perforated wall portions whereby the airflow source creates an airflow from within the grass-box to the outside thereof. Preferably, the arrangement is such that air can be drawn from within the grass-box by the airflow source.

Advantageously, the lid is formed with air flow direction means which open towards ground datum when the grass-box is in its first operating position, the arrangement being such that air directed into the grass-box picks up cut grass from the ground, and such that said air subsequently escapes from the grass-box and is substantially returned to the impeller. Preferably, the arrangement is such that, in use, the impeller pressurises air within the cutting chamber so as to support the lawnmower above ground datum on a cushion of air.

In a preferred embodiment, the lawnmower further comprises a liner positioned within the grass-box. The liner may be constituted by a flexible bag, preferably made of impermeable plastics material, or by a pre-formed bag shaped to fit within the grass-box. In either case, the lawnmower may further comprise one or more additional liners positioned within the first-mentioned liner.

The invention also provides a method of collecting grass cut by a lawnmower, the method comprising the steps of positioning a bag in the path of conveyed grass cut by the lawnmower, and directing cut grass into the bag.

Preferably, the method further comprises the step of positioning the bag within a grass-box forming part of the lawnmower.

This method may further comprise the step of removing the bag containing cut grass for subsequent disposal.

This invention further provides a method of collecting and disposing grass cut by a lawnmower, the method comprising the steps of positioning a stack of bags in the path of conveyed grass cut by the lawnmower, directing cut grass into the innermost bag, removing the innermost bag and contained cut grass for subsequent disposal, directing cut grass into the bag which is then innermost, removing said bag and contained cut grass, and repeating the steps of directing cut grass into the innermost bag and removing said bag and contained cut grass until the stack of bags is used up.

The invention still further provides a system for the collection and disposal of grass cut by a lawnmower, the system comprising means for conveying grass cut by the lawnmower, and a bag positioned in the path of the conveyed cut grass, the bag being removable from said path together with contained cut grass for disposal thereof.

In a preferred embodiment, the system further comprises a grass-box forming part of the lawnmower, the bag being positioned within the grass-box for collecting cut grass, and being removable from the grass-box for disposal of the cut grass.

Preferably, the system further comprises at least one additional bag positioned within said bag. The or each bag may be a flexible bag, preferably made of impermeable plastics material, or by a pre-formed bag shaped to fit within the grass-box.

Advantageously, the cut grass conveying means is constituted by means for producing an airflow.

The invention still further provides a garden shredder comprising a housing, means for shredding garden refuse, an outlet for shredded garden refuse, and a stack of nested bags positioned around the outlet for collection of shredded garden refuse in the innermost bag. Preferably, the shredder further comprises a receptacle for supporting the stack of bags at the outlet of the shredder.

The invention also provides a garden vacuum collector comprising a housing, an outlet for material collected by the collector, and a stack of nested bags positioned around the outlet for collection of said material in the innermost bag.

The invention still further provides a stack of nested bags for collecting material, the arrangement being such that material can be collected in the innermost bag, the innermost bag and contained collected material can then be removed from the stack for subsequent disposal, further material can then be positioned in the bag which is then innermost, that bag and contained material can then be removed, and the process repeated until the stack of bags is used up.

A hover mower constructed in accordance with the invention will now be described in greater detail, by way of example, with reference to the drawings, in which:-
Figures 1 to 4 are schematic side elevations of the mower in different operating positions;
Figure 5 is a view, similar to that of Figure 1, of a modified form of mower; and
Figure 6 is a perspective view of another embodiment of the invention.

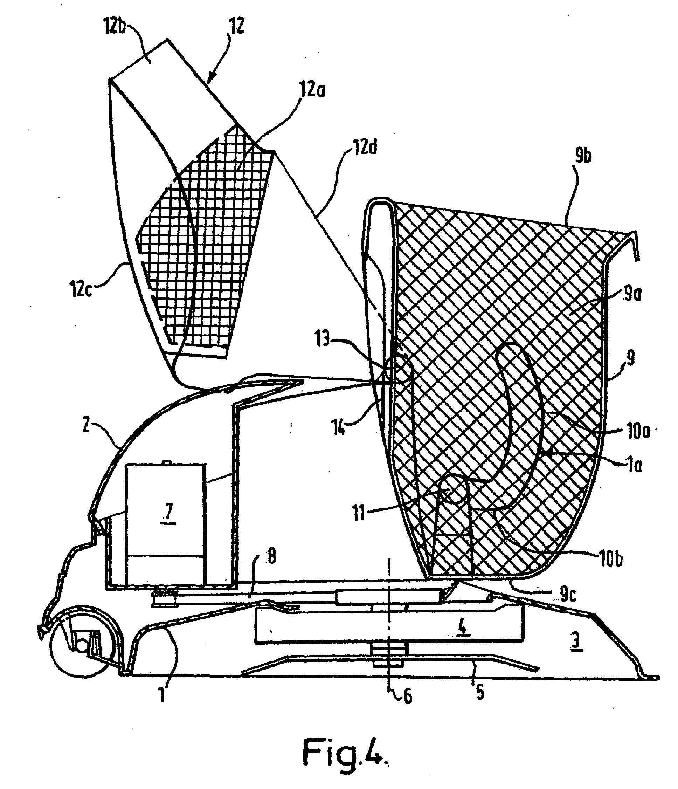

Referring to the drawings, a lawnmower has a hood or deck 1, and a housing 2 mounted above the deck. The deck 1 defines a hover chamber 3 within which an impeller 4 and a cutter blade 5 are rotatably mounted for rotation about a common vertical axis 6. The impeller 4 and the cutter blade 5 are powered by an electric motor 7 via a drive belt 8. The motor 7 is positioned at the front of the housing 2. A grass-box 9 is mounted above the deck 1, the grass-box being formed with cam tracks 10 on its side surfaces. The cam tracks 10 cooperate with cams 11 constituted by cylindrical bosses formed inside the side walls of the housing 2 at opposite sides thereof. The side walls of the grass-box 9 are formed with perforations 9a, as shown. The closed end wall, indicated by the reference 9c, of the grass-box 9 may be formed with perforations in addition to, or instead of, the perforations 9a. The grass-box 9 has one end 9b (see in particular Figure 4) which is open over substantially the entire cross-section of the grass-box.

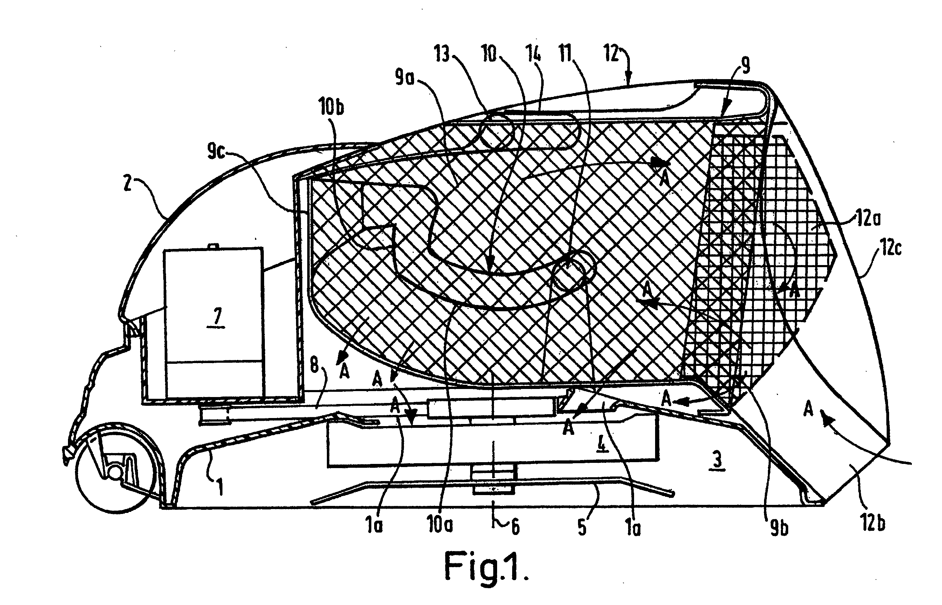

The cam tracks 10 are aligned with one another, and each has a first, curved portion 10a, and a second, L-shaped portion 10b. The free end sections of the L-shaped cam track portions 10b terminate at the closed end wall 9c, of the grass-box 9. A lid 12 is pivotally mounted to the housing 2 by means of cylindrical bosses 13 provided on the insides of the side walls of the housing, these bosses engaging within complementary apertures (not shown) formed at the sides of the top, front end (as viewed in Figure 1) of the lid. Alternatively, the bosses could extend outwardly from the sides of the lid 12, and engage within complementary apertures formed on the insides of the side walls of the housing. These bosses 13 constitute cams which engage within cam tracks 14 formed on the side surfaces of the grass-box 9. The lid 12 is (as best shown in Figure 4) formed with perforated or grilled portions 12a. The lid 12 also defines a collection chute 12b which, in the grass cutting position shown in Figure 1, is downwardly directed towards the ground at the rear of the machine.

Figure 1 shows the lawnmower in its normal (grass-cutting) position with the grass-box 9 in a generally horizontal position with its open end 9b facing towards the rear of the machine. In this position, the motor 7 drives the impeller 4 which draws in air (as shown by the arrows A) via the collection chute 12b, the interior of the grass-box 9, the perforations 9a and apertures 1a in the deck 1. Some air is also drawn into the impeller 4 from the interior of the grass-box 9 via the open end 9b, the perforations 12a in the lid 12, and the apertures 1a. There are, therefore, multiple routes by which the air can pass from the grass-box 9 and the lid 12 into the eye of the impeller 4. As the air is drawn in in this manner, it picks up cut grass deposited behind the machine, and carries it into the grass-box 9 where it is deposited. Air then escapes out of the open end 9b of the grass-box 9, and is sucked in by the impeller 4 via the perforated portions 12a of the lid 12 and the apertures 1a.

The rear wall 12c of the lid 12 is constituted by a transparent panel, so that the user can see into the machine to see when the grass-box 9 is filling up.

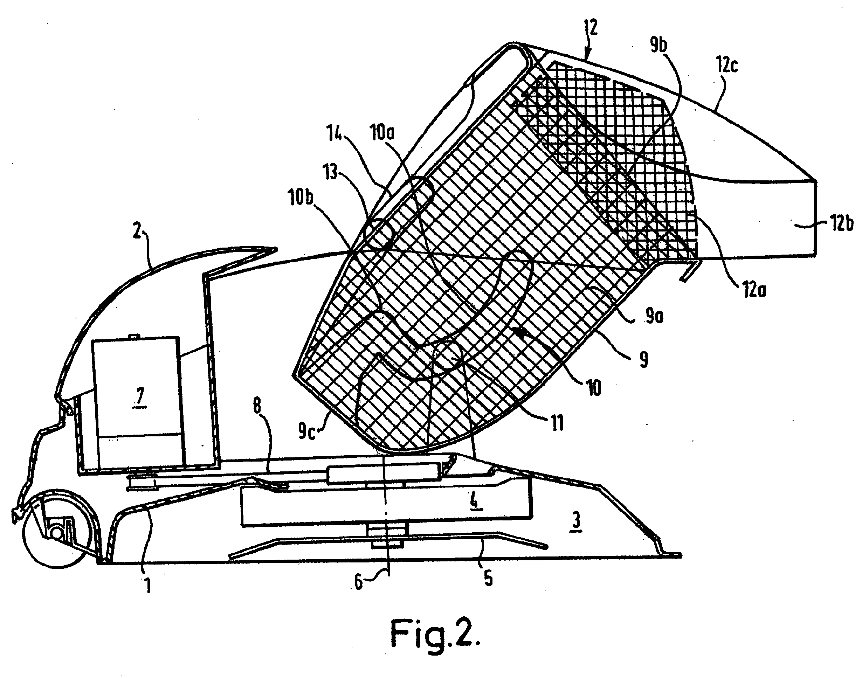

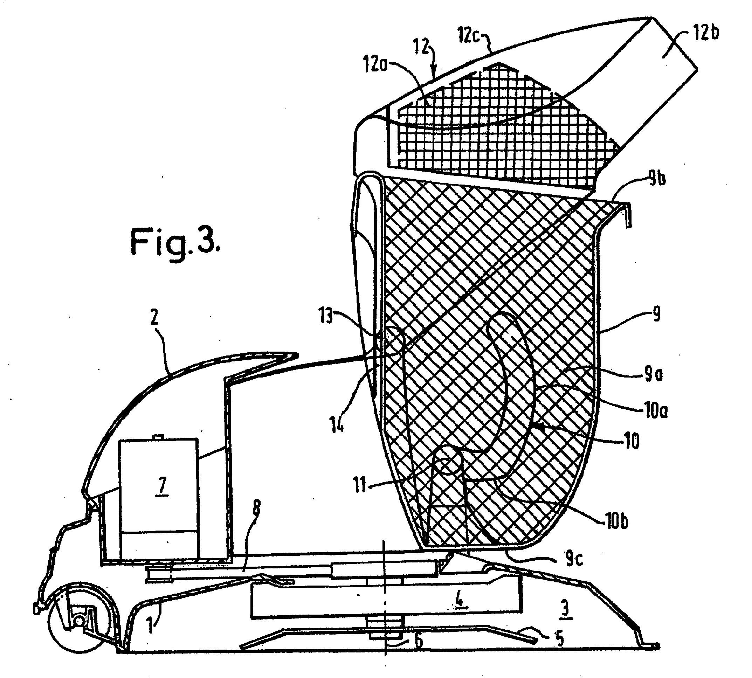

When the grass-box 9 is full, the motor 7 is turned off, and the lid 12 and the grass-box 9 are pivoted from the positions shown in Figure 1, through the positions in Figures 2 and 3, until they occupy positions shown in Figure 4. The lid 12 and the grass-box 9 are locked together, as they are pivoted from the position shown in Figure 1 towards the position shown in Figure 3, by the engagement of the cams 11 with the first portions 10a of the cam tracks 10, and by the engagement of the cams 12 with the cam tracks 14. During this pivotal movement, the cams 11 move along the first cam track portions 10a, and the cams 13 are constrained to remain substantially centrally within the cam tracks 14. Further joint pivotal movement of the lid 12 and the grass-box 9 causes the cams 11 to move along the cam track portions 10b until they reach the "corners" of these L-shaped track portions (see Figure 3). In this position, the cam tracks 14 are substantially vertical, and gravity forces the grass-box 9 downwards, so that the cams 13 move to the ends of the cam tracks 14, allowing the lid 12 to be pivoted further to the position shown in Figure 4. During this further pivotal movement of the lid 12, the grass-box 9 is prevented from pivoting by interengagement of the cams 11 with the "corners" of 12b L-shaped cam track portions 10b. The grass-box 9 can then be removed from the machine by lifting it vertically so that the cams 11 slide along the end sections of the cam track portions 10b. The grass-box 9 can then be transported to, for example, a compost heap or to a roadside collection point for emptying. As the grass-box 9 is substantially vertical during this removal process, there is little chance of grass being spilt during the process. After emptying, the grass-box 9 is positioned back into the machine with the end sections of the cam track portions 10b sliding along the cams 11, and with the cams 13 positioned at the ends of the cam tracks 14. The lid 12 is then rotated into engagement with the grass-box 9, and subsequently the two members are rotated together until they are in the positions shown in Figure 1.

It will be apparent that the hover mower described above has advantages when compared with known hover mowers. In particular, the open end 9b of the grass-box 9 is somewhat smaller than the open end of known grass-boxes, and so is much easier to empty into a standard wheelie bin than known grass-boxes. Moreover, because cut grass enters the grass-box 9 through the open end 9b (when the grass-box is in the horizontal configuration shown in Figure 1) and is emptied from the same end, there is no need to provide the grass-box with a separate inlet aperture for cut grass, so there is a substantial reduction in the risk of cut grass spilling out when the grass-box is removed from the mower, as this can only be done when the grass-box is substantially vertical. Moreover, by providing handles at the open end 9b of the grass-box 9, removal of the grass-box from the mower is facilitated, without the user having to bend over too far. This is to be contrasted with many known types of mower, with which the user has to bend right over to grip the grass-box at positions close to the ground. This type of known mower also often requires the user to release engagement between the grass-box and the mower with one hand, whilst lifting the grass-box with the other. Clearly, the removal process for the grass-box described above is simpler and more convenient. It also puts less stress on the back of the user, which is particularly important for users who suffer from low back pain.

It will be apparent that modifications could be made to the mower described above. Thus, the grass-box 9 could be arranged to pivot about a central longitudinal axis of the mower, in which case the grass-box would pivot from side-to-side rather than from front-to-rear as in the embodiment described above. It would also be possible to pivotally mount both the grass-box 9 and the lid 12 by simple pivot means, in which case disengagable interlock members would be provided on the grass-box and on the lid for holding those two members together during the first part of their pivotal movement, that is to say until they rotate from the position shown in Figure 1 to the position shown in Figure 3.

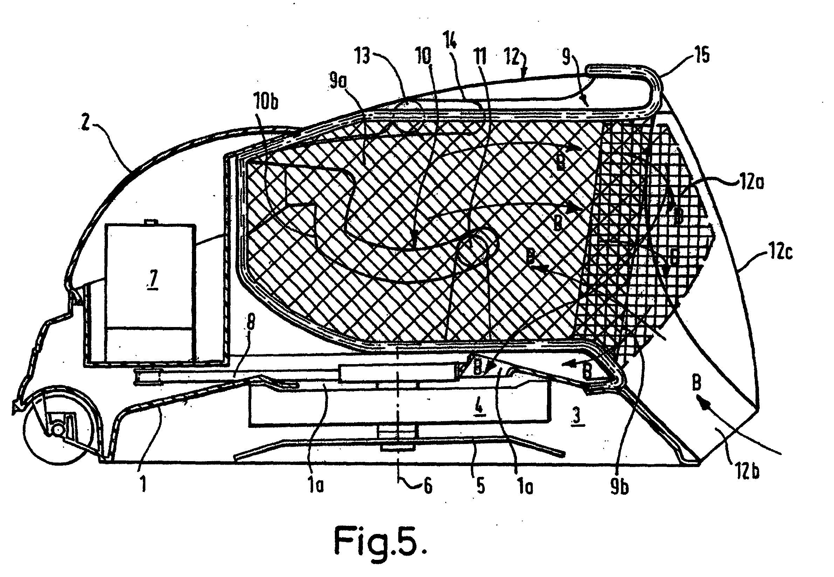

In particular, the mower could be modified as will now be described with reference to Figure 5. The basic machine of Figure 5 is identical with that of Figure 1, and so like reference numerals will be used for like parts, and only the modification will be described in detail. This modification is to position a bin liner 15 inside the grass-box 9. As shown, the free end of the bin liner 15 is wrapped over the rim of the grass-box 9 at the open end 9b thereof. In use, when the motor 7 is turned on, the impeller 4 draws air from inside the grass-box 9 through the perforations 9a, to force the bin liner 15 against the internal walls of the grass-box, the air pressure being effective to hold the liner against the internal walls in a fully-open configuration.

With this modified embodiment, airflow through the machine is somewhat different from that through the mower of Figure 1. Thus, because the bin liner 15 is substantially impermeable, air cannot leave the grass-box 9 via the perforations 9a. Instead, after air and cut grass enter the grass-box 9, and the cut grass drops out of the air stream into the grass-box, the air leaves the grass-box via the open end 9b, prior to being drawn into the impeller 4 via the perforations 12a in the lid 12 and the apertures 1a in the deck 1. The airflow here is indicated by arrows B and, again, there are multiple routes by which air can pass from the grass-box 9 and the lid 12 into the eye of the impeller 4.

The modified embodiment of Figure 5 has all the advantages of the embodiment of Figure 1, with the additional advantage that cut grass can be transported for disposal in the bin liner 15. Alternatively, where cut grass is to be deposited for kerb side collection, storage in bin liners is clearly preferable to emptying cut grass onto the ground for subsequent collection, particularly in windy conditions.

Obviously, the user will have a supply of bin liners 15 for use when cut grass is to be stored for subsequent kerb side collection. It is, of course, also possible to re-use a bin liner 15 if cut grass is emptied either onto a compost heap or into a wheelie bin.

In a modified method of operating the arrangement of Figure 5, a plurality of bin liners 15 may be positioned within the grass-box 9 prior to use. As before, when the motor 7 is turned on, the impeller 4 draws air from inside the grass-box 9 through the perforations 9a to force all the bin liners 15 against the internal walls of the grass-box. During subsequent use, cut grass is forced into the innermost bin liner 15 until the user notices that that bin liner is full. The mower is then turned off, the innermost bin liner 15 together with its contents is removed either for emptying or storage for subsequent kerb side collection, and the mower is re-started so that cut grass is forced into the bin liner which is now the innermost bin liner. This procedure continues until all the bin liners have been filled. Subsequently, a new set of bin liners 15 can be positioned within the grass-box 9.

In another modified arrangement, instead of using bin liners made of plastics material, pre-shaped paper bags may be used. Here again a single paper bag or a stack of paper bags can be used. Such pre-shaped bags may be such as to be storable in a flat configuration.

In yet another modified arrangement, the mower could be used solely with either a liner 15 or a bag, without the need for the grass-box 9. For example, a liner 15 could be fixed to the lid 12, for example by positioning the liner with its open end around that end portion of the lid identified by the reference 12d (see Figure 4). In this case, with the lid in the position shown in Figure 1, air pressure caused by the impeller 4 will cause the liner to open fully when the motor 7 is turned on, the liner being pressed against the internal walls of the housing 2. When the liner is full, the motor 7 will be stopped, and the lid pivoted to the position shown in Figure 4, after which the liner can be removed from the end 12d of the lid 12. In a further variation, the liner may be replaced by a shirred tube made, for example, of a plastics material. One end of the shirred tube will be engaged over the end 12d of the lid 12, and a portion of the shirred tube will then be extended, and a knot tied in the end thereof. The lid 12 will then be closed, and the motor 7 started. Here again, the air pressure caused by the impeller 4 will cause the bag so formed to open up ready for collecting grass cut by the mower. When that bag is full, the motor 7 will be stopped, the lid 12 pivoted to its fully open position, the tube further extended and a knot tied to enclose the cut grass. The tube will then be cut, so that the resulting enclosed bag can be removed for disposal. A further knot will then be tied in the free end of the tube, and the process repeated. This process is, therefore, similar to the way in which sausage meat is extruded into a shirred sausage skin tube.

Although each of the mowers described above is a hover mower, it will be apparent that the invention (either with or without the bag or bags) could also be used with a wheeled rotary lawnmower. In this case, air and cut grass would be blown into the grass-box (either with or without the bag or bags). It will also be apparent that the invention (either with or without the bag or bags) could also be used with a cylinder-type lawnmower, in which case the cut grass would be directed into the grass-box (either with or without the bag or bags). In either the wheeled rotary or the cylinder-type lawnmower, it would also be possible to use the bag or bags as grass collection means without the use of a grass-box.

It will also be apparent that the principle of using one or more bags inside a grass-box could be applied to grass-boxes of any suitable construction. In particular, it is not essential for such bags to be used with the "rotatable" grass-box 9 described above with reference to Figures 1 to 5. 5

It will also be apparent that the invention which utilises a bag or bags within a grass-box could also be used with other lawn care machines such as a scarifier. In that case, one or more bags would be positioned within the debris collector of the scarifier for collecting debris raked from a lawn by the machine. Where the debris collector contains a single bag, this would be removed when full for disposal of the debris, and a new bag positioned within the debris collector for further debris collection. Where a stack of bags is positioned with the debris collector, these will be removed one-by-one as they are filled, in a similar manner to that in which the nested bags are removed from the grass-box of the lawnmower described above. Accordingly, the invention is not limited to lawnmower applications, and the term "lawnmower" as used in the claims should be taken to include lawn care machines such as a scarifier. Similarly, the term "cut grass" should be taken to include debris raked from a lawn.

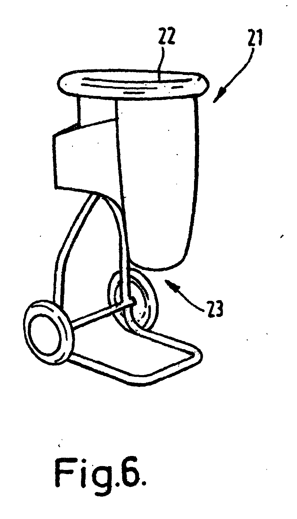

In a further development of the invention (see Figure 6) a nested stack of bags could be used with a garden shredder 21. The shredder 21 is provided with an inlet 22 through which garden rubbish such as twigs, plant cuttings etc are fed to a shredding mechanism (not shown) housed within the main body of the shredder. A suitable receptacle (not shown) would be fixed to the outlet 23 of the shredder, the receptacle containing a nested stack of bags (also not shown). In use, once the innermost bag is full, the receptacle would be removed from the shredder 21, the innermost bag together with its shredded contents would be removed, and the receptacle and remaining bags would be fitted back on to the shredder over the outlet 23. The bag which is now the innermost will then be filled with garden debris when the shredder 21 is next used. Once full, the process would be repeated until all the bags are used up.

In a modification of this further development, a nested stack of bags could be used with a garden vacuum collector of a type used for the picking up leaves and other garden debris. In this case, the stack of bags would fit over the outlet of the collector, in place of the conventional fabric bag or other form of collector. Here again, in use, once the innermost bag is full, the stack of bags would be removed from the collector, the innermost bag together with its contents would be removed and the remaining bags would be fitted back onto the collector over its outlet.

In yet a further development of the invention, a nested stack of bags could be used to collected domestic rubbish in, for example, a pedal bin or other domestic waste-collection receptacle. For example, a stack of nested bags sized to fit a standard pedal bin could be used in place of the usual single bin liner. Once full, the innermost bag and contents would be removed for disposal, leading the remaining bags within the bin. The bin liner now innermost would then be used for rubbish collection and subsequent removal, and the procedure would continue until all the bin liners have been filled.

## Claims

1. A lawnmower comprising a housing, and a grass-box, wherein the grass-box is mounted on the housing for movement between a first operating position in which cut grass can enter the grass-box via an opening, and a second operating position in which the grass-box opening faces away from ground datum, thereby preventing cut grass falling out of the grass-box.

2. A lawnmower as claimed in claim 1, wherein the grass-box opening is at one end of the grass-box, and is positioned substantially vertically when the grass-box is in its first operating position, and substantially horizontally and uppermost when the grass-box is in its second operating position.

3. A lawnmower as claimed in claim 1 or claim 2, wherein the grass-box is pivotally mounted within the housing about an axis transverse to the central longitudinal axis of the lawnmower.

4. A lawnmower as claimed in claim 3, wherein the grass-box is formed with cam track means engagable with cam means provided within the housing, the cam track means and the cam means constituting means for pivotally mounting the grass-box within the housing.

5. A lawnmower as claimed in claim 4, wherein the cam track means is constituted by two cam tracks, one on each side surface of the grass-box, and the cam means is constituted by two cams projecting inwardly from the two sides of the housing.

6. A lawnmower as claimed in any one of claims 1 to 5, further comprising a hood within the housing, and a cutting chamber within the hood above ground datum.

7. A lawnmower as claimed in any one of claims 1 to 6, wherein the grass-box is positioned within the housing above the hood.

8. A lawnmower as claimed in claim 7, further comprising a lid which overlies the grass-box when the grass-box is in its first operating position, the lid being pivotally connected to the housing.

9. A lawnmower as claimed in claim 8, wherein the lid is pivotally connected to the housing by means of two cylindrical bosses projecting inwardly from the two sides of the housing, and complementary apertures formed in the sides of the lid.

10. A lawnmower as claimed in claim 9, further comprising means for locking the lid to the grass-box as the grass-box moves between its first and second operating positions.

11. A lawnmower as claimed in claim 10, when appendant to claim 6, wherein the locking means is constituted by the engagement of the bosses with second cam tracks formed one on each side surface of the grass box, and by the engagement of the cams within the first-mentioned cam tracks.

12. A lawnmower as claimed in claim 11, wherein the arrangement is such that the grass-box and the lid are pivotable together until the grass-box is in its second operating position, the lid is subsequently pivotable further relative to the grass-box, and the grass-box is then removable from the housing by sliding the cams along the first-mentioned cam tracks and the bosses along the second cam tracks.

13. A lawnmower as claimed in any one of claims 1 to 12, further comprising an airflow source.

14. A lawnmower as claimed in claim 13, wherein the airflow source is an impeller rotatably mounted within the cutting chamber.

15. A lawnmower as claimed in claim 13 or claim 14, wherein the grass-box includes perforated wall portions whereby the airflow source creates an airflow from within the grass-box to the outside thereof.

16. A lawnmower as claimed in claim 15, wherein the arrangement is such that air can be drawn from within the grass-box by the airflow source.

17. A lawnmower as claimed in any one of claims 13 to 16 when appendant to claim 8, wherein the lid is formed with air flow direction means which open towards ground datum when the grass-box is in its first operating position, the arrangement being such that air directed into the grass-box picks up cut grass from the ground, and such that said air subsequently escapes from the grass-box and is substantially returned to the impeller.

18. A lawnmower as claimed in claim 17, wherein the arrangement is such that, in use, the impeller pressurises air within the cutting chamber so as to support the lawnmower above ground datum on a cushion of air.

19. A lawnmower as claimed in any one of claims 1 to 18, further comprising a liner positioned within the grass-box.

20. A lawnmower as claimed in claim 19, wherein the liner is constituted by a flexible bag.

21. A lawnmower as claimed in claim 20, wherein the bag is made of impermeable plastics material.

22. A lawnmower as claimed in claim 19, wherein the liner is constituted by a pre-formed bag shaped to fit within the grass-box.

23. A lawnmower as claimed in any one of claims 19 to 22, wherein the liner is so positioned within the grass-box that a pressure difference between the interior and the exterior thereof ensures that the liner clings, in use, to the inside of the grass-box.

24. A lawnmower as claimed in any one of claims 19 to 23, further comprising one or more additional liners positioned within the first-mentioned liner.

25. A method of collecting grass cut by a lawnmower, the method comprising the steps of positioning a bag in the path of conveyed grass cut by the lawnmower, and directing cut grass into the bag.

26. A method as claimed in claim 25, further comprising the step of positioning the bag within a grass-box forming part of the lawnmower.

27. A method as claimed in claim 25 or claim 26, further comprising the step of removing the bag containing cut grass for subsequent disposal.

28. A method of collecting and disposing grass cut by a lawnmower, the method comprising the steps of positioning a stack of bags in the path of conveyed grass cut by the lawnmower, directing cut grass into the innermost bag, removing the innermost bag and contained cut grass for subsequent disposal, directing cut grass into the bag which is then innermost, removing said bag and contained cut grass, and repeating the steps of directing cut grass into the innermost bag and removing said bag and contained cut grass until the stack of bags is used up.

29. A system for the collection and disposal of grass cut by a lawnmower, the system comprising means for conveying grass cut by the lawnmower, and a bag positioned in the path of the conveyed cut grass, the bag being removable from said path together with contained cut grass for disposal thereof.

30. A system as claimed in claim 29, further comprising a grass-box forming part of the lawnmower, the bag being positioned within the grass-box for collecting cut grass, and being removable from the grass-box for disposal of the cut grass.

31. A system as claimed in claim 29 or claim 30, further comprising at least one additional bag positioned within said bag.

32. A system as claimed in any one of claims 29 to 31, wherein the or each bag is a flexible bag.

33. A system as claimed in any one of claims 29 to 32, wherein the bag is made of impermeable plastics material.

34. A system as claimed in any one of claims 29 to 31, wherein the or each bag is constituted by a pre-formed bag shaped to fit within the grass-box.

35. A system as claimed in any one of claims 29 to 34, wherein the cut grass conveying means is constituted by means for producing an airflow.

36. A garden shredder comprising a housing, means for shredding garden refuse, an outlet for shredded garden refuse, and a stack of nested bags positioned around the outlet for collection of shredded garden refuse in the innermost bag.

37. A shredder as claimed in claim 36, further comprising a receptacle for supporting the stack of bags at the outlet of the shredder.

38. A garden vacuum collector comprising a housing, an outlet for material collected by the collector, and a stack of nested bags positioned around the outlet for collection of said material in the innermost bag.

39. A stack of nested bags for collecting material, the arrangement being such that material can be collected in the innermost bag, the innermost bag and contained collected material can then be removed from the stack for subsequent disposal, further material can then be positioned in the bag which is then innermost, that bag and contained material can then be removed, and the process repeated until the stack of bags is used up.
